# DEMANDE DE BREVET EUROPEEN

(11) **EP 4 604 138 A1**
(43) Date de publication de la demande: **20.08.2025**
(21) Numéro de dépôt: 24157426.8
(22) Date de dépôt: 13.02.2024
(51) Int. Cl.: G21C 17/10, G01D 5/26, G01D 5/34

(54) **PROCÉDÉ ET SYSTÈME DE MESURE DE POSITION D'UN ÉLÉMENT MOBILE EN TRANSLATION D'UN RÉACTEUR NUCLÉAIRE**

(71) Demandeur: Société Technique pour l'Energie Atomique, 91190 Villiers Le Bacle (FR)
(72) Inventeur: ZINONI, Carl, 13290 LES MILLES (FR); DONNIER, François, 84120 PERTUIS (FR); BRUN, Michel, 13109 SIMIANE-COLLONGUE (FR)
(74) Mandataire: Cabinet Camus Lebkiri

(57) **Abrégé**

L'invention concerne un procédé (300) de mesure de position d'un élément mobile en translation (111) d'un réacteur nucléaire, comprenant les étapes suivantes :
- Emission (301) de kN signaux optiques (210), k et N étant des entiers naturels supérieurs ou égaux à 1, par kN fibres optiques dites émettrices (215) comprises dans N sondes résistantes à un milieu primaire ;
- Réception (302) des kN signaux optiques par N pistes (22) résistantes à un milieu primaire, chaque piste recevant k signaux optiques, lesdites pistes étant constituées de surfaces réfléchissantes (222) et de surfaces diffusantes (221) ;
- Réception (303) par mN fibres optiques dites réceptrices (214), m étant un entier naturel supérieur ou égal à k, comprises dans les N sondes (21) des kN signaux optiques réfléchis (2221) ou diffusés (2211) par les N pistes (22) ;
- Conversion (304) des kN signaux optiques reçus par les mN fibres optiques réceptrices (214) en code binaire.

## Description

### DOMAINE TECHNIQUE DE L'INVENTION

Le domaine technique de l'invention est celui des mesures classées au sens sûreté dans un réacteur nucléaire, tout particulièrement mais non limitatif d'un réacteur à eau pressurisée.

La présente invention concerne des systèmes de mesure de position et en particulier la mesure de position d'un élément mobile en translation dans le réacteur nucléaire. Un cas typique étant la mesure de position des absorbants de contrôle de la réaction nucléaire.

### ARRIERE-PLAN TECHNOLOGIQUE DE L'INVENTION

Plusieurs méthodes de mesure permettent d'obtenir la position d'éléments mobiles dans un réacteur nucléaire tels que les tiges de commandes mobiles au sein d'une cuve de réacteur par exemple. Ces mesures sont dites classées au sens sûreté, car elles rentrent dans la protection d'une installation capable d'engendrer des pollutions de l'environnement, incommoder ou impacter de manière notable le voisinage et le public, nuire à la sécurité par rapport au public, au voisinage ou au personnel des établissements ou nuire à la santé et à la sécurité des salariés au travail. Les installations nucléaires, au vu de leurs caractéristiques, sont des installations classées.

Parmi les méthodes de mesures de positions de tiges de commande mobiles, on retrouve notamment les technologies de mesure par induction et les mesures par relais Reed.

Le principe de mesure de position par induction consiste à faire passer une cible magnétique ou ferromagnétique solidaire de la partie mobile devant des bobinages, le nombre de bobines étant égal au nombre de pas de mesure. Lorsqu'une tige de commande est en mouvement par rapport à au moins une bobine de détection, un signal de sortie est induit. Le signal de sortie comprend des caractéristiques identifiables représentatives d'une ou plusieurs de positions de la tige de commande à l'intérieur de la bobine de détection et est traité ensuite par une unité pour déduire ces positions. Cette méthode de mesure présente plusieurs inconvénients : les bobines résistantes aux conditions de température et pression rencontrées dans le réacteur sont difficiles à réaliser, et ce principe de mesure requiert de nombreux câblages à sortir de la cuve. Enfin les cibles magnétiques et ferromagnétiques perdent en efficacité lorsqu'elles sont soumises aux conditions de températures d'une cuve de réacteur nucléaire.

Le principe de mesure par relais Reed consiste à placer une série de commutateurs Reed espacés sur la longueur de la course de la tige de commande et connectés pour fournir des signaux de sortie. Lorsque la tige de commande se déplace, un aimant permanent monté sur la tige de commande applique un champ de magnétique externe aux ensembles de commutateurs Reed qui mettent en service ou court-circuitent des résistances selon la position de l'aimant. Cette mesure permet de limiter le nombre de fils utilisés par rapport à la méthode précédente, mais présente plusieurs inconvénients tels que l'efficacité limitée des aimants permanents et des relais Reed dans les conditions de température d'un milieu primaire. En effet, pour les relais REED le fonctionnement est garanti à la tension nominale jusqu'à une température ambiante de 65°C à 200°C selon les modèles, alors que dans un milieu primaire la température varie entre 290°C et 350°C. De plus, la durée de vie des relais REED est fortement réduite dans des milieux à hautes températures. Enfin, l'outil de sûreté de fonctionnement AMDEC (Analyse des modes de défaillance, de leurs effets et de leur criticité) de service est peu favorable à la détection de pannes avec ce principe de mesure. D'autres technologies de mesures de position d'une tige de commande ont été étudiées, par exemple des capteurs de position acoustiques, mais celles-ci n'ont pas été développées à l'échelle industrielle du fait des difficultés de qualifications en milieu primaire.

Il existe aujourd'hui des capteurs de positions à fibres optiques qui se développent dans divers environnements et notamment l'environnement industriel. Un procédé de mesure de position d'un élément mobile avec des capteurs à fibres optiques consiste à placer une ou plusieurs fibres émettrices et une ou plusieurs fibres réceptrices sur une même pièce. La ou les fibres émettrices envoient des signaux optiques à une pièce mobile, qui contient des surfaces réfléchissantes et diffusantes ou absorbantes. Les signaux reçus réfléchis ou diffusés/absorbés sont codés binairement : un signal réfléchi sera codé « 1 » et un signal diffusé sera codé « 0 ». Les capteurs de positions à fibres optiques connus de l'état de la technique permettent de mesurer des positions absolues ou relatives d'une pièce mise en translation.

Les capteurs à fibres optiques présentent des caractéristiques intéressantes : du fait du faible encombrement des fibres, celles-ci peuvent s'intégrer dans des endroits étroits et difficiles d'accès. De plus, des technologies à fibres optiques adaptées aux irradiations ont été développées, permettant d'élargir en théorie leurs applications dans un milieu radiatif sans qu'elles noircissent. Cependant, malgré leurs avantages, les technologies à fibres optiques ne sont pas adaptées aux conditions de corrosion et de pression au sein d'une cuve de réacteur nucléaire. Il existe donc dans un premier temps, un besoin de connaître précisément la position d'une tige mobile d'une grappe de commande avec un système plus simple à réaliser, peu encombrant, adapté à un l'environnement d'une cuve de réacteur nucléaire et fiable concernant la détection de pannes. Le besoin réside notamment dans l'adaptation de capteurs de positions intéressants dans le domaine industriel, tel que les capteurs à fibre optique, au domaine nucléaire.

### RESUME DE L'INVENTION

Dans ce contexte, la présente invention vise à fournir une alternative aux méthodes précédentes permettant de s'affranchir des problèmes précités en s'adaptant à l'environnement d'un circuit primaire dans un réacteur nucléaire.

Pour cela, un premier aspect de l'invention concerne un procédé de mesure de position d'un élément mobile en translation d'un réacteur nucléaire, caractérisé en ce qu'il comprend les étapes suivantes :
- Emission de kN signaux optiques, k et N étant des entiers naturels supérieurs ou égaux à 1, par kN fibres optiques dites émettrices comprises dans N sondes résistantes à un milieu primaire ;
- Réception des kN signaux optiques par N pistes résistantes à un milieu primaire, chaque piste recevant k signaux optiques, lesdites pistes étant constituées de surfaces réfléchissantes et de surfaces diffusantes;
- Réception par mN fibres optiques dites réceptrices, m étant un entier naturel supérieur ou égal à k, comprises dans les N sondes des kN signaux optiques réfléchis ou diffusés par les N pistes;
- Conversion des kN signaux optiques reçus par les mN fibres optiques réceptrices en code binaire.

L'invention met en oeuvre un capteur de position à fibres optiques permettant de mesurer, par exemple une position absolue, d'un élément mobile dans le réacteur. Ledit capteur est plus simple à mettre en place par rapport aux autres méthodes évoquées : il n'y a pas fils de bobinages fins à fabriquer par exemple. De plus, contrairement à un procédé de mesure par fibres optiques classique utilisé dans le milieu industriel par exemple, l'invention met en oeuvre un système comprenant des sondes à fibres optiques et des pistes adaptés aux conditions et agressions d'un milieu primaire dans une cuve de réacteur nucléaire. On entend par milieu primaire, dans un circuit primaire d'un réacteur nucléaire, un milieu dont le fluide caloporteur est soumis aux paramètres suivants :
- Milieu en eau pressurisée haute température, particulièrement corrosif
- Pression comprise entre 120 bar et 180 bar
- Température comprise entre 250°C et 350°C
- Débit d'eau compris entre 2m/s et 5m/s
- Irradiation (gamma et neutrons) comprise en 2MGy et 100MGy

Ainsi, les fibres optiques sont comprises dans des sondes protectrices résistantes à un milieu primaire et ne sont pas directement exposées à une eau à haute température et pression.

Selon un mode de réalisation, le procédé cité ci-dessus permet d'obtenir une mesure de position du mobile en translation avec une précision de mesure qui dépend de N et est égale à la longueur des pistes divisée par 2^{N}. Ce mode de réalisation permet de choisir la précision souhaitée en choisissant le nombre N.

Dans un autre mode de réalisation du procédé, l'élément mobile en translation entraine un composant cylindrique en rotation, ledit composant cylindrique en rotation étant entouré d'une piste auxiliaire constituée de P surfaces réfléchissantes et de P surfaces diffusantes, P étant supérieur ou égal à 1, ladite piste auxiliaire étant résistante à un milieu primaire, le procédé étant caractérisé en ce qu'il comprend les étapes suivantes supplémentaires permettant de mesurer une position relative de l'élément mobile en translation:
- Emission de deux signaux optiques, par deux fibres optiques dites émettrices comprises dans deux sondes auxiliaires résistantes à un milieu primaire, les sondes auxiliaires étant espacées d'un angle non nul;
- Réception des deux signaux optiques par la piste ;
- Réception par au moins deux fibres optiques fibres optiques dites réceptrices comprises dans les deux sondes auxiliaires des deux signaux optiques réfléchis ou diffusés par la piste auxiliaire ;
- Transmission et interprétation des deux signaux optiques reçus par les fibres optiques réceptrices par une unité de traitement ;

L'invention met en oeuvre avantageusement une deuxième mesure relative de position d'un élément mobile en translation, en plus de la première cité précédemment, permettant donc d'avoir deux mesures de position et d'améliorer la précision de mesure, avec des dispositifs résistants à un milieu primaire. Selon la variante de réalisation, la précision de mesure de position relative d'un élément mobile en translation dans un réacteur nucléaire dépend du nombre total de surfaces réfléchissantes et de surfaces diffusantes et est égale égal à 2P.

Outre les caractéristiques qui viennent d'être évoquées dans le paragraphe précédent, une caractéristique du procédé de mesure peut être, pour une sonde parmi les N sondes et les deux sondes auxiliaires, comprenant une fibre optique émettrice et au moins une fibre optique réceptrice:
- la nature réfléchie ou diffusée d'un signal optique reçu par la au moins une fibre optique réceptrice est déterminée grâce à l'intensité du signal optique reçu par la au moins une fibre optique réceptrice selon les étapes suivantes :
   ∘ Lorsque l'intensité du signal optique reçu est supérieure ou égale à un seuil haut, le signal optique reçu par la au moins une fibre optique réceptrice de ladite sonde est un signal optique dit réfléchi;
   ∘ Lorsque l'intensité du signal optique reçu est supérieure ou égale à un seuil bas et est strictement inférieure au seuil haut, le seuil bas étant strictement inférieur au seuil haut, le signal optique reçu par la au moins une fibre optique réceptrice de la sonde est un signal optique dit diffusé;
et la différence entre l'intensité du signal optique réfléchi et de l'intensité signal optique diffusé est égale à 13dB, et le seuil haut est tel que la différence entre l'intensité du signal réfléchi et du seuil haut est comprise entre 0 dB et 13 dB.

L'invention permet aisément de détecter un signal optique de nature réfléchie ou diffusée grâce au seuil haut et seuil bas définis précédemment.

En outre, parmi les N sondes et les deux sondes auxiliaires, comprenant une fibre émettrice et au moins une fibre réceptrice :
- Lorsque l'intensité du signal optique reçu par la fibre optique réceptrice est nulle ou positive et inférieure au seuil bas, le signal optique reçu par la au moins une fibre optique est dit défectueux ;
La différence entre l'intensité du signal optique réfléchi et du seuil bas est égale à 28 dB et la différence entre le seuil haut et le seuil bas est de préférence supérieure ou égale à 15 dB.

L'invention présente avantageusement un codage à trois niveaux au lieu d'un codage binaire en permettant la détection de signaux défectueux en plus des signaux réfléchis ou diffusés, afin de détecter des éventuelles anomalies ou pannes et de garantir un niveau de sécurité exigé.

Un autre aspect de l'invention concerne une sonde à fibres optiques de mesure de position d'un élément mobile apte à mesurer selon le procédé la position d'un élément mobile dans un réacteur nucléaire, comportant :
- une fibre optique émettrice et une fibre optique réceptrice ;
- une enveloppe de protection des fibres optiques comportant :
   ∘ au moins une partie flexible étanche comprenant un métal résistant à un milieu primaire ; Cette partie flexible assurant d'une part la souplesse permettant de cheminer la sonde dans l'aménagement interne du réacteur, et d'accommoder la différence de dilatation entre la fibre et l'enveloppe métallique,
   ∘ au moins une partie rigide étanche comprenant un métal ou une céramique résistants à un milieu primaire ;
   ∘ une fenêtre transparente étanche résistante à un milieu primaire, brasée en extrémité la partie métallique rigide

L'enveloppe comprend des matériaux résistants à un milieu primaire, à la corrosion et à l'oxydation et peut donc être immergée dans un circuit primaire sans que les fibres optiques ne soient endommagées. La fenêtre transparente permet de laisser passer des signaux optiques.

Selon un mode de réalisation, une caractéristique de la sonde à fibres optiques est :
- une première extrémité de la partie rigide est soudée à une première extrémité de la partie flexible ;
- une deuxième extrémité de la partie rigide est soudée à la fenêtre transparente.

Ce mode de réalisation avantageux permet de garantir l'étanchéité des extrémités de la partie rigide dans le milieu primaire.

Selon une variante de réalisation, l'enveloppe de la sonde à fibres optiques comprend un miroir incliné de 45° par rapport à l'axe de la partie rigide de la sonde. En effet, il est possible que les fibres utilisées au sein de la sonde aient un faible angle de courbure et que leurs bords radiaux ne puissent pas être placés en face des pistes réfléchissantes ou diffusantes, les signaux optiques peuvent alors être renvoyés par un miroir permettant ainsi de placer les fibres parallèlement au déplacement de l'élément mobile et réduire l'encombrement.

Selon un mode de réalisation avantageux, les fibres optiques comprises dans la sonde sont constituées de matériaux résistants aux irradiations à certaines longueurs d'ondes, par exemple entre 800 nm et 1000 nm pour les fibres optiques multimodes et entre 1000 et 1150 nm pour les fibres optiques monomodes. Ainsi le noircissement des fibres optiques est fortement réduit aux dites longueurs d'ondes sous l'effet des radiations dans un réacteur nucléaire.

Un autre aspect de l'invention concerne un système de mesure de position d'un élément mobile d'un réacteur nucléaire comprenant :
- N sondes à fibres optiques ;
- N pistes constituées de surfaces diffusantes et de surfaces réfléchissantes résistantes à un milieu primaire ;
apte à mettre en oeuvre le procédé selon l'invention

Le système permet de mesurer la position d'un élément mobile quelconque, en général et plus précisément une tige de commande dans une cuve de réacteur nucléaire. Les pistes peuvent être constituées de métaux et de revêtement résistants et adaptés à un milieu primaire, ce qui évite leur noircissement

Selon un premier mode de réalisation du système cité précédemment, qu'une première piste parmi les N pistes comprend une surface diffusante, une deuxième piste parmi les N pistes comprend une surface réfléchissante et une surface diffusante et toute piste supplémentaire comprend le double du nombre de pistes réfléchissantes et de pistes diffusantes par rapport à la piste précédente

Chaque piste supplémentaire permet d'améliorer la précision de mesure de position.

Selon un mode de réalisation, le système cité précédemment comprend un système mécanique comportant :
- Une roulette coopérant avec les pistes mobiles et solidaire d'un bras articulé ;
- Un ressort coopérant d'une part avec le bras articulé et d'autre part avec un support fixe ;
et caractérisé en ce qu'une sonde parmi les N sondes est fixé au bras articulé.

Les signaux optiques sont sensibles à la distance parcourue car ils parcourent plusieurs interfaces ayant plusieurs indices différents, et les indices varient avec la température. Ainsi, la distance entre une fenêtre transparente et les pistes doit être la plus petite possible et surtout constante. Le système mécanique précité permet de maintenir cette distance constante en cas de vibrations et jeux mécaniques au sein d'un réacteur.

Selon un mode de réalisation, le système de mesure comprend :
- Une piste auxiliaire constituée de P surfaces réfléchissantes et P surfaces diffusantes ;
- Deux sondes à fibre optique espacées d'un angle non nul.

Le système comprend avantageusement des composants permettant d'effectuer une mesure de position relative.

Un autre aspect de l'invention concerne un réacteur nucléaire comprenant un système de mesure de position tels que cités précédemment.

### BREVE DESCRIPTION DES FIGURES

D'autres caractéristiques et avantages de l'invention ressortiront clairement de la description qui en est donnée ci-dessous, à titre indicatif et nullement limitatif, en référence aux figures annexées, parmi lesquelles :
La figure 1 est un schéma simplifié d'une cuve de réacteur nucléaire à eau pressurisée ;
La figure 2 représente une tige mobile dans son fourreau fixe dans lequel des sondes à fibres optiques et des pistes cibles sont placées ;
La figure 3 représente en détail une sonde à fibres optiques ;
La figure 4 est une coupe transversale de la sonde à fibre optique ;
La figure 5 représente un ensemble de pistes constituées de surfaces diffusantes et réfléchissantes ;
La figure 6 représente en détail une paire de surfaces constituées d'une surface réfléchissante et une surface diffusante ;
La figure 7 représente un premier mode de réalisation d'un système de mesure de position absolue d'une tige de commande en translation ;
La figure 8 représente un deuxième mode de réalisation du système de mesure de position absolue d'une tige de commande en translation ;
La figure 9 représente un mode de réalisation d'un système de mesure de position relative d'une tige de commande en translation
La figure 10 est un schéma synoptique, représentant un procédé de mesure de position d'un élément mobile en translation d'un réacteur nucléaire;
La figure 11 est une représentation graphique de l'intensité d'un signal optique reçu par une sonde à fibres optiques en fonction de la position d'un élément mobile en translation ;
Le figure 12 est un schéma synoptique représentant un procédé de mesure de la position relative d'un élément mobile en translation d'un réacteur nucléaire.

### DESCRIPTION DETAILLEE

Sauf précision contraire, un même élément apparaissant sur des figures différentes présente une référence unique.

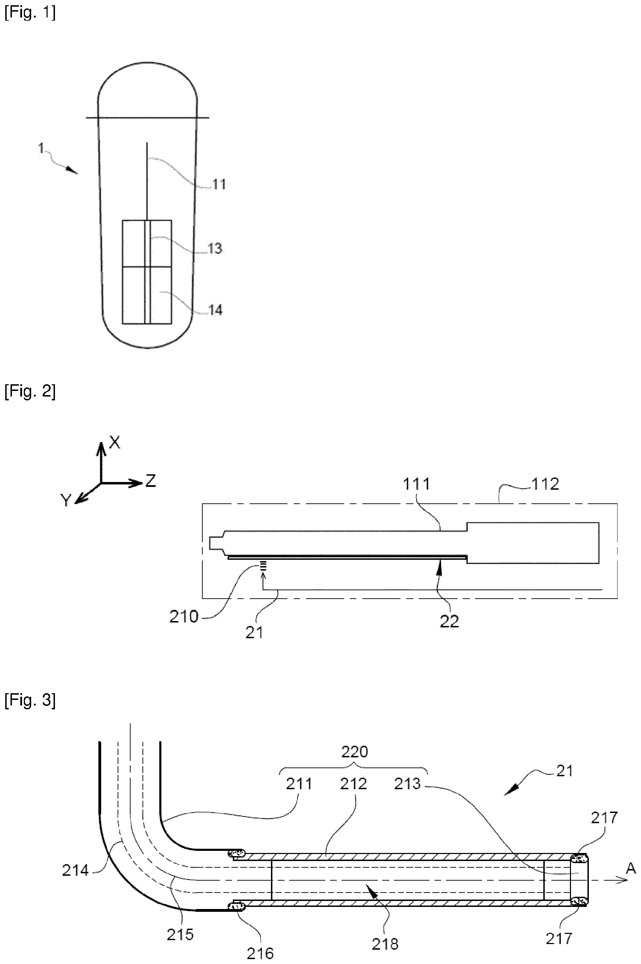

La figure 1 est un schéma d'une cuve 1 de réacteur à eau pressurisée (REP), dont on montre un ensemble 11 constitué d'une tige de commande en translation 111, dont on cherche à mesurer la position, dans sa partie fixe 112, un élément des guides de grappes de commande 13 et un élément du coeur 14. L'eau circulant dans la cuve est soumise aux conditions de pression, température débit du circuit primaire :
- Milieu en eau pressurisée haute température, particulièrement corrosif
- Pression comprise entre 120 bar et 180 bar
- Température comprise entre 250°C et 350°C
- Débit d'eau compris entre 2m/s et 5m/s
- Irradiation (gamma et neutrons) comprise en 2MGy et 100MGy

On appellera dans la suite milieu primaire l'environnement du circuit primaire. Ainsi, tout élément introduit dans la cuve doit être résistant au milieu primaire précité.

La figure 2 montre plus en détail une tige de commande en translation 111 dont on cherche à mesurer la position, dans sa partie fixe 112 qu'on appellera fourreau, situés dans la cuve 1. Lorsqu'elle est mise en mouvement, la tige de commande en translation 111 est en mouvement par rapport au fourreau 112 selon l'axe z, selon lequel elle s'étend. Dans cette représentation on retrouve des sondes 21 à fibres optiques schématisées, fixées au fourreau 112, émettant des signaux optiques 210 vers des pistes cibles 22 solidaires de la tige de commande en translation 111.

Dans la figure 3 on retrouve un schéma détaillé d'une sonde 21 à fibres optiques. La sonde 21 comprend une enveloppe 220 de protection constituée d'une partie flexible 211, une partie rigide 212 d'axe A et une fenêtre transparente 213. La partie flexible peut par exemple être un tube métallique, résistant à un milieu primaire, d'une longueur suffisante permettant de sortir du milieu primaire et rejoindre un milieu moins agressif, via une traversée de cuve similaire à la traversée de cuve décrite dans le brevet EP 33 17 883. La partie flexible 211 est liée par des soudures, préférentiellement des brasures 216, à la partie rigide 212 qui peut également être un tube constitué d'un ou plusieurs métaux résistants à un milieu primaire. Un métal constituant les parties rigide et/ou flexible peut être l'inox 316L, qui est un acier inoxydable non soumis à la corrosion et compatible avec une eau du milieu primaire. La paroi interne de la partie rigide 212 est brasée aux gaines en cuivre, en or ou en aluminium des fibres optiques au niveau de la surface 218 pour éviter que lesdites fibres optiques glissent au sein de la partie rigide ; Cette brasure est permise par un revêtement (coating) métallique des fibres nues et peut nécessiter selon la géométrie retenue pour les fibres et le tube rigide des pièces métalliques d'adaptation.

La fenêtre transparente 213, permettant la transmission des signaux optiques, est liée à la partie rigide 212 grâce à des soudures, préférentiellement des brasures 217. La fenêtre transparente 213 est étanche et résistante à un milieu primaire, à l'oxydation et la corrosion. La fenêtre peut être un hublot constitué de verre, par exemple saphir choisi de manière que les coefficients de dilatation de la fenêtre transparente 213 et de la partie rigide 212 soient appairés afin d'éviter la casse des brasures 217 lors des transitions de températures du milieu primaire. La fenêtre transparente 213, la partie rigide 212 et la partie flexible 211 sont sensiblement de même diamètre. Ledit diamètre étant typiquement compris entre 2 à 4 mm.

Dans cet exemple, les brasures 216 d'une première extrémité de la partie rigide 212 à une extrémité de la partie flexible 211 et les brasures 217 d'une deuxième extrémité de la partie rigide à la fenêtre transparente 213 garantissent l'étanchéité des deux extrémités de la partie rigide 212.

L'enveloppe 220 de la sonde 21 comprend une pluralité de fibres optiques, qu'elle protège des agressions du milieu primaire, dont une fibre optique émettrice 215 et plusieurs fibres optiques réceptrices 214. Plus généralement, l'enveloppe 220 peut comprendre une ou plusieurs fibres optiques réceptrices 215.

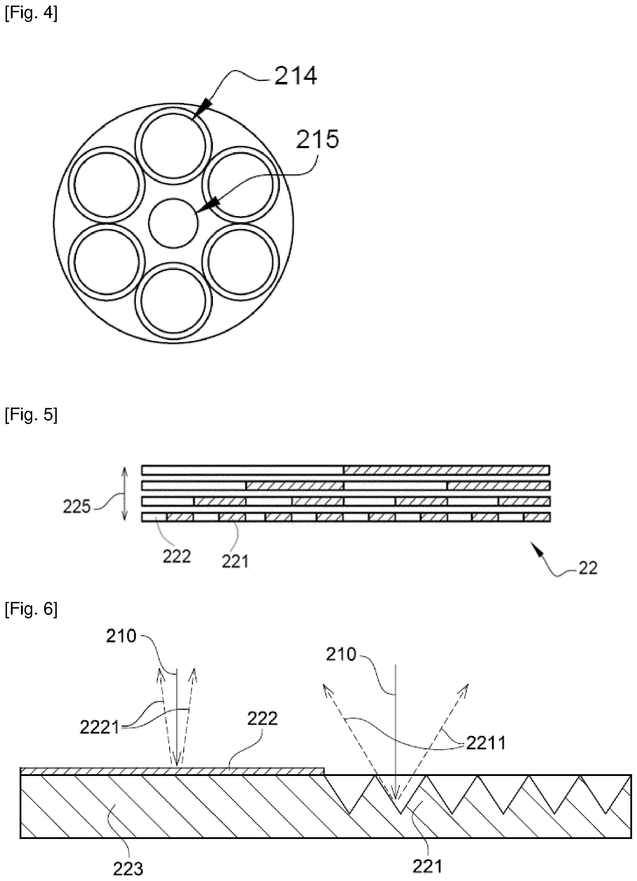

La figure 4 est une coupe transverse de la sonde dans laquelle sont représentées : une fibre optique émettrice 215 et plusieurs fibres optiques réceptrices multimodes 214 qui l'entourent de manière à optimiser la collection de signaux optiques reçus. Les signaux optiques qui se propagent au sein des fibres peuvent avoir des longueurs d'onde comprises entre 800 et 1200 nm pour les fibres multimodes et comprises entre 1000 et 1200 nm pour les fibres monomodes. Les fibres optiques peuvent par exemple être conçues avec une gaine en cuivre et un coeur en silice ultra pur avec une faible teneur OH (groupe hydroxyle) afin d'éviter leur noircissement sous l'effet des radiations nucléaires aux longueurs d'ondes citées précédemment.

Chaque sonde 21 émet des signaux optiques 210 vers une piste cible 22. La figure 5 est une représentation de quatre pistes 22 espacées chacune de 3mm de préférence. Les pistes sont constituées d'une alternance de surfaces réfléchissantes 222 et diffusantes 221 ou absorbantes. Plus généralement, on peut choisir un nombre de pistes N permettant de mesurer 2^{N} positions différentes de la tige de commande en translation 111, la précision de mesure étant égale à la course d'une tige de commande en translation 111 divisée par 2^{N}. Dans le cas de la figure 5, on peut mesurer 2⁴ =16 différentes positions de la tige de commande en translation 111. La course d'une tige de commande en translation 111 valant de typiquement entre 2000 mm et 4000mm, la précision de mesure est alors égale à : 1/2^{N} de la distance de déplacement totale du mobile. La longueur des pistes 22 est égale à la course de la tige de commande en translation 111, et la largeur totale 225 des 4 pistes vaut de préférence 10 mm.

Les pistes 22 sont constituées de matériaux résistants aux conditions d'un milieu primaire, à l'oxydation et à la corrosion, afin que leur noircissement soit minime. La figure 6 montre en détail une partie d'une piste comprenant une surface réfléchissante 222 et une surface diffusante 221. Une pièce métallique 223 résistante au milieu primaire conçue avec des matériaux tels que l'inox 316 L est utilisée pour la conception de la surface réfléchissante 222 et de la surface diffusante 221. Pour obtenir une surface réfléchissante 222, la pièce métallique 223 est revêtue d'un métal peu ou non sensible à l'oxydation, tel que le chrome dur ou l'or par exemple. La surface diffusante 221 résulte de l'usinage d'une surface rugueuse sur la pièce métallique 223.

Une caractéristique d'une surface rugueuse est le paramètre Ra qui mesure la distance entre la moyenne arithmétique des valeurs absolues des écarts, entre les pics et les creux et la ligne centrale. Ra vaut préférentiellement 3.6 pour les surfaces diffusantes 221 et 0.2 pour les surfaces réfléchissantes. De plus, la profondeur des surfaces diffusantes 221 par rapport aux surfaces réfléchissantes 222 peut être comprise entre 2 mm et 5mm.

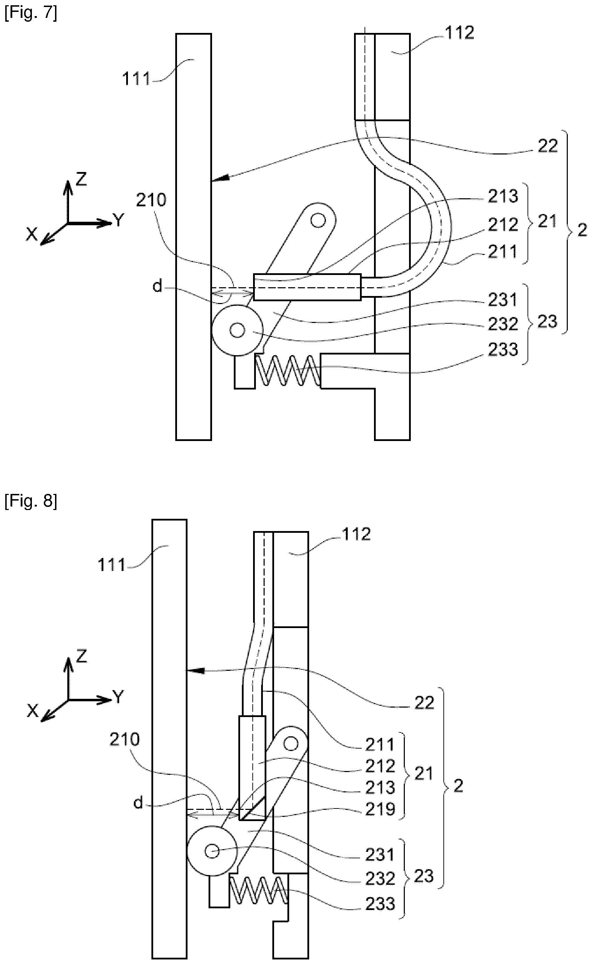

Dans la figure 7 on retrouve un premier mode de réalisation du système de mesure 2 de la position d'une tige de commande en translation 111. Le système de mesure 2 comprend une piste 22, une sonde à fibres optiques 21 correspondante et un système suiveur 23 constitué d'un bras articulé 231, une roulette 232 et un ressort 233. La partie flexible 211 de la sonde est en partie solidaire du fourreau 112 et la partie rigide 212 est solidaire du bras articulé 231. Le bras articulé 231 est solidaire de la roulette 232 qui est au contact de la piste 22 fixée à la tige de commande en translation 111. Le bras articulé 231 est également solidaire du ressort 233, fixé au fourreau 112.

Dans ce mode de réalisation, la partie rigide 212 est perpendiculaire à la tige de commande en translation 111, les signaux optiques émis par une fibre optique émettrice comprise dans la sonde à fibres optiques 21 ne rencontrent qu'une seule surface au sein de la sonde : la fenêtre transparente 213. Les signaux optiques 210 émis par la sonde 21 traversent ensuite le milieu primaire dont l'indice de réfraction est sensible à la température et peut dégrader l'intensité desdits signaux optiques 210. La distance d parcourue par les signaux optiques 210 doit alors être constante et la plus petite possible tout en ménageant le jeu nécessaire à la bonne translation de la partie mobile. Typiquement cette distance est de l'ordre de quelques mm, entre 0.5 et 5 mm par exemple, afin d'éviter la perte d'intensité des signaux optiques 210. Or le fonctionnement des CRDM (Control Rod Drive Mechanism, dispositif de contrôle de tige de commande mobiles) est à l'origine de vibrations et de jeux mécaniques lors de la mise en mouvement des tiges de commandes en translation 111 qui peuvent faire varier la distance d parcourue par les signaux optiques, c'est pourquoi le système suiveur 23 a été mis en oeuvre afin de maintenir cette distance d constante. Le système suiveur 23 est asservi mécaniquement grâce au ressort 233, qui s'allonge ou se comprime lorsque la roulette 232 est entraînée par une tige de commande mobile en translation 11 en cas de mouvement dans une direction autre que l'axe z suivant lequel la tige de commande en translation 111 s'étend. Le ressort entraine la rotation du le bras articulé 231 autour de l'axe x, permettant à la roulette de rester en contact avec une piste 22.

Dans la figure 8, on présente un deuxième au mode de réalisation de l'invention. Dans ce mode, la sonde 21 est parallèle à la tige de commande en translation 111 et son enveloppe 220 comprend un miroir 219 placé à 45° par rapport à l'axe A de la partie rigide 212 de la sonde 21. Les signaux optiques émis par la fibre optique émettrice 215 de la sonde 21 sont d'abord réfléchis par le miroir 219 avant d'être transmis par la fenêtre transparente 213. On définit par miroir toute surface pouvant réfléchir des signaux optiques. Ce mode de réalisation est privilégié lorsqu'un faible encombrement est requis, ou lorsque le rayon de courbure maximal de la partie flexible 211 est compris par exemple entre 30 et 50 mm et ne permet pas de réaliser le mode présenté dans la figure 7.

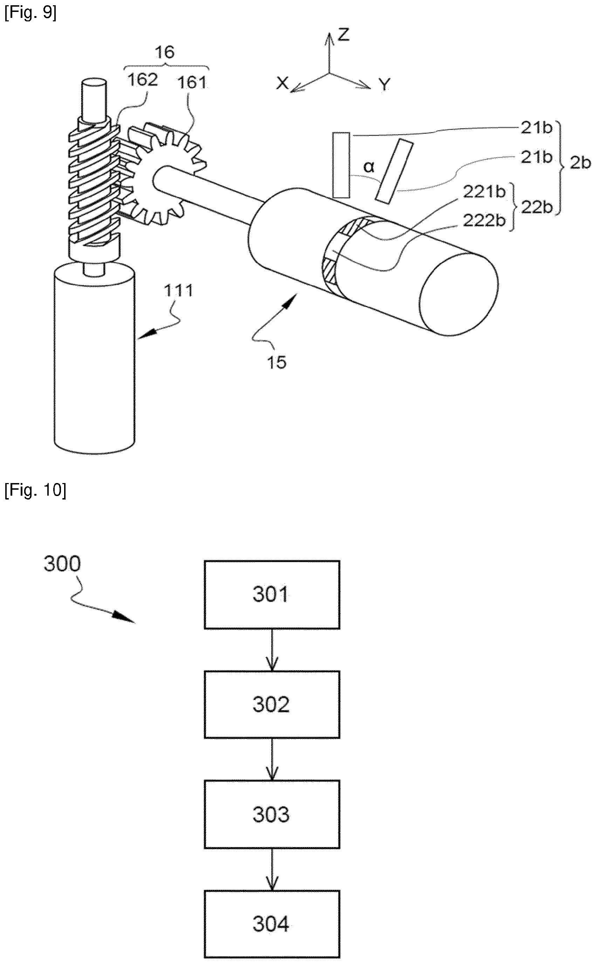

La figure 9 représente une variante de l'invention, dans laquelle en plus de l'un des deux modes de réalisations précédents, un second sous système de mesure relative 2b, complémentaire et différent du précédent permet de mesurer la position relative de la tige mobile en translation 111 en mesurant le nombre de tours effectués par un composant cylindrique 15 entrainé par la tige de commande mobile en translation 111 grâce à un mécanisme 16 vis-écrou et plus précisément roue 161 et vis sans fin 162 de pas p, exprimé en mm . Le mécanisme 16 transforme le mouvement de la tige de commande en translation 111 en un mouvement de rotation du composant cylindrique 15 avec un rapport p exprimé en mm/tours. Ce mécanisme 16 est détaillé dans le brevet EP 3 329 493 B1. Le système de mesure relative 2b comprend une piste auxiliaire 22b entourant le composant cylindrique 15, ladite piste auxiliaire 22b étant constituée de P surfaces réfléchissantes 222b et P surfaces diffusantes 221b, P étant un entier supérieur ou égal à 1. Le système 2b comprend également deux sondes auxiliaires 21b identiques à celles décrites précédemment, situées face à la piste auxiliaire 22b, espacées d'un angle α non nul et inférieur à 360°/P.

La figure 10 est un schéma synoptique illustrant l'enchaînement des étapes du procédé 300 de mesure selon l'invention. Le procédé est réalisé grâce au système de mesure2 à fibres optiques décrit sur les figures 7 et 8 et permet d'obtenir la position absolue d'un élément mobile dans la cuve d'un réacteur nucléaire, par exemple une tige de commande mobile de commande 111.

Une première étape du procédé consiste en l'émission 301 d'un ou plusieurs signaux optiques respectivement par une fibre émettrice 215 d'une ou plusieurs sondes 21, les longueurs d'ondes des signaux pouvant être comprises entre 800 et 1200 nm. Les signaux sont reçus dans une deuxième étape 302 par une ou plusieurs pistes 22, chaque sonde étant en face d'une piste 22 afin que chaque signal optique soit reçu par une seule piste. Si un signal optique est reçu par une piste réfléchissante 222 et est renvoyé par ladite piste réfléchissante, alors on dira qu'il est réfléchi, et si un signal optique est reçu par une piste diffusante et est diffusé par ladite piste diffusante 221 alors on dira qu'il est diffusé. Les signaux dits réfléchis 2221 ou diffusés 2211 sont reçus ensuite par les fibres multimodes réceptrices 214 dans une troisième étape 303.

Les signaux optiques reçus par les fibres optiques réceptrices 214 sont traités et convertis ensuite dans une unité (non illustrée) dans une quatrième étape 304. Lorsqu'un signal reçu est un signal réfléchi 2221, alors son code correspondant sera 1, et lorsqu'un signal reçu est un signal diffusé 2211, alors son code correspondant sera 0, ce type de codage est appelé codage binaire. Pour une sonde, on détermine la nature réfléchie ou diffusée d'un signal optique reçu par les fibres réceptrices 214 selon la valeur de l'intensité du signal optique reçu par les fibres réceptrices 214.

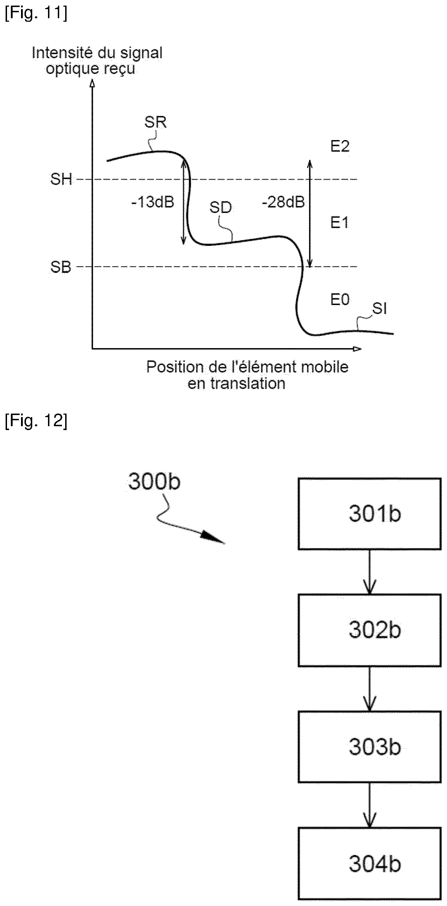

La figure 11 est une représentation graphique de l'intensité d'un signal optique reçu par une fibre réceptrice en fonction de la position de l'élément mobile en translation 111. Lorsque l'intensité du signal optique reçu est supérieure ou égale à un seuil SH, également appelé seuil haut, alors le signal est dit réfléchi et a une intensité SR. Lorsque l'intensité du signal optique reçu est supérieure ou égale à une seuil SB, également appelé seuil bas, et strictement inférieure à SH, alors le signal optique reçu est dit diffusé et a une intensité SD. Lorsque l'intensité du signal est strictement inférieure au seuil SB, le signal est considéré comme défectueux et a une intensité SI. La différence d'intensité entre l'intensité SR d'un signal réfléchi 2221 et l'intensité SD d'un signal diffusé 2211 est de préférence de l'ordre de 13 dB et la différence d'intensité entre un signal réfléchi 2221 et un signal défectueux est de préférence de l'ordre de 28 dB. Ainsi, ces valeurs permettent de déterminer l'écart minimal préférentiel entre le seul haut SH et le seuil bas SB : la différence SR-SH étant inférieure à ou égale 13dB, et la différence SR-SB étant égale à 28dB, on en déduit alors que la différence SH-SB est supérieure ou égale à 15dB. Ce type de codage est un codage dit à trois niveaux et permet de détecter les pannes et anomalies : en effet, se limiter à deux niveaux de codage (réfléchi/diffusé) serait dangereux car un signal reçu pourrait à tort être considéré comme diffusé et toute anomalie ne serait pas détectée à temps. Un signal défectueux peut résulter d'un défaut d'alignement entre les sondes à fibres optiques 21 et les pistes 22 par exemple ou d'un dysfonctionnement des sondes 21 par exemple.

Lorsque le système de mesure 2 comprend N sondes à fibres optiques 21 et N pistes 22, la position de la tige de commande mobile en translation 111 sera donnée sous la forme d'un code binaire à N chiffres compris chacun respectivement dans l'ensemble {0,1}.

La figure 12 est un schéma synoptique illustrant l'enchaînement d'étapes supplémentaires du procédé 300 permettant d'obtenir une mesure de position relative d'un élément mobile en translation, par exemple la tige de commande mobile en translation 111. Le procédé est réalisé grâce au système de mesure 2b à fibres optiques cité précédemment.

Une première étape, parmi les étapes supplémentaires du procédé consiste en l'émission 301b de deux signaux optiques respectivement par deux fibres émettrices 215 de deux sondes auxiliaires 21b, espacées d'un angle α, les longueurs d'ondes des signaux pouvant être comprises entre 800 et 1200 nm. Les signaux sont reçus dans une deuxième étape 302b par une piste auxiliaire 22b. Si un signal optique est reçu par une piste réfléchissante 222b et est renvoyé par ladite piste réfléchissante, alors on dira qu'il est réfléchi, et si un signal optique est reçu par une piste diffusante 221b et est diffusé par ladite piste diffusante 221 alors on dira qu'il est diffusé. Les signaux dits réfléchis 2221 ou diffusés 2211 sont reçus ensuite par les fibres réceptrices 214 dans une troisième étape 303b.

Les signaux optiques reçus par les fibres optiques réceptrices 214 sont ensuite traités par une unité. Le décalage d'un angle α entre les deux sondes auxiliaires 21b, permet de déterminer, grâce à l'unité de traitement, le nombre de fois que le composant cylindrique 15 a tourné d'un angle α et de déduire le déplacement de l'élément mobile en translation 111 grâce au rapport p exprimé en mm/tour. Le déphasage entre les deux signaux optiques reçus par les fibres réceptrices 214 permet de déterminer le sens de rotation du composant cylindrique 16 et donc le sens de déplacement de l'élément mobile en translation 111. La mesure relative d'un élément mobile en translation 111 nécessite un étalonnage initial. La précision de mesure de ladite mesure relative dépend du nombre P de surfaces réfléchissantes 222b et du nombre P surfaces diffusantes 221b et du pas p de la vis sans fin 162, et vaut p/P. Le pas p vaut préférentiellement 20mm et le nombre P est préférentiellement compris entre 5 et 10, la précision de mesure de position d'un élément mobile en translation 111 est donc préférentiellement comprise entre 2 et 4 mm.

## Revendications

1. Procédé (300) de mesure de position d'un élément mobile en translation (111) d'un réacteur nucléaire **caractérisé en ce qu'**il comprend les étapes suivantes :
- Emission (301) de kN signaux optiques (210), k et N étant des entiers supérieurs ou égaux à 1, par kN fibres optiques dites émettrices (215) comprises dans N sondes résistantes à un milieu primaire ;
- Réception (302) des kN signaux optiques par N pistes (22) résistantes à un milieu primaire, chaque piste recevant k signaux optiques, lesdites pistes étant constituées de surfaces réfléchissantes (222) et de surfaces diffusantes (221) ;
- Réception (303) par mN fibres optiques dites réceptrices (214), m étant un entier naturel supérieur ou égal à k, comprises dans les N sondes (21) des kN signaux optiques réfléchis (2221) ou diffusés (2211) par les N pistes (22) ;
- Conversion (304) des kN signaux optiques reçus par les mN fibres optiques réceptrices (214) en code binaire.

2. Procédé (300) selon la revendication 1, **caractérisé en ce que** la précision de mesure de position d'un élément mobile en translation (11) dans le réacteur nucléaire dépend de N et est égale à la longueur des pistes divisée par 2^{N}.

3. Procédé (300) selon une des revendications précédentes, **caractérisé en ce que** l'élément mobile en translation (111) entraine un composant cylindrique (15) en rotation, ledit composant cylindrique (15) en rotation étant entouré d'une piste auxiliaire (22b) constituée de P surfaces réfléchissantes (222b) et de P surfaces diffusantes (221b) , P étant supérieur ou égal à 1, ladite piste auxiliaire (22b) étant résistante à un milieu primaire et recevant des signaux optiques émis par deux sondes auxiliaires (21b) résistantes à un milieu primaire et espacées d'un angle (α) non nul, le procédé étant **caractérisé en ce qu'**il comprend les étapes suivantes supplémentaires permettant de mesurer une position relative de l'élément mobile en translation (111) :
- Emission (301b) de deux signaux optiques, par deux fibres optiques dites émettrices (215) comprises dans les deux sondes auxiliaires (21b),
- Réception (302b) des deux signaux optiques par la piste ;
- Réception (303b) par au moins deux fibres optiques dites réceptrices (214) comprises dans les deux sondes (21) auxiliaires des deux signaux optiques réfléchis (2221) ou diffusés (2211) par la piste auxiliaire (22b) ;
- Transmission et interprétation (304b) des deux signaux optiques reçus par les fibres optiques réceptrices (214) par une unité de traitement ;

4. Procédé (300b) selon une des revendications précédentes, **caractérisé en ce que** la précision de mesure de position relative d'un élément mobile en translation (111) dans un réacteur nucléaire dépend du nombre total de surfaces réfléchissantes (222b) et de surfaces diffusantes (221b) et est égale égal à 2P.

5. Procédé (300) de mesure selon l'une des revendications précédentes **caractérisé en ce que** pour une sonde, parmi les N sondes (21) et les deux sondes auxiliaires (21b), comprenant une fibre optique émettrice (215) et au moins une fibre optique réceptrice (214):
- la nature réfléchie ou diffusée d'un signal optique reçu par la au moins une fibre optique réceptrice (215) est déterminé grâce à l'intensité du signal optique reçu par la au moins une fibre optique réceptrice (215) les étapes suivantes:
∘ Lorsque l'intensité du signal optique reçu est supérieure ou égale à un seuil haut (SH), le signal optique reçu par la au moins une fibre optique réceptrice (214) est un signal optique dit réfléchi (2221);
∘ Lorsque l'intensité du signal optique reçu est supérieure ou égale à un seuil bas (SB) et est strictement inférieure au seuil haut (SH), la seuil bas (SB) étant strictement inférieur au seuil haut (SH), le signal optique reçu par la au moins une fibre réceptrice (214) est un signal optique dit diffusé (2211);
Et **caractérisé en ce que** la différence entre l'intensité (SR) du signal optique réfléchi (2221) et de l'intensité (SD) signal optique diffusé est égale à 13dB, et **en ce que** le seuil haut (SH) est tel que la différence entre l'intensité (SR) du signal réfléchi et du seuil haut (SH) est comprise entre 0 dB et 13 dB.

6. Procédé (300) de mesure selon les revendications précédentes **caractérisé en ce que**, pour une sonde, parmi les N sondes (21) et les deux sondes auxiliaires (21b), comprenant une fibre optique émettrice (215) et au moins une fibre optique réceptrice (214) :
- Lorsque l'intensité du signal optique reçu par la au moins une fibre optique réceptrice (214) est nulle ou positive et inférieure à un seuil bas (SB), le signal optique est défectueux.

7. Sonde (21) à fibres optiques de mesure de position d'un élément mobile **caractérisée en ce qu'**elle apte à mesurer selon le procédé décrit dans les revendications précédentes, un élément mobile (21) dans un réacteur nucléaire et comprenant :
- une fibre optique émettrice (215) et une fibre optique réceptrice (214) ;
- une enveloppe (220) de protection des fibres optiques comportant :
∘ une partie flexible (211) étanche comprenant un métal résistant à un milieu primaire ;
∘ une partie rigide (212) étanche comprenant un métal et d'une céramique résistants à un milieu primaire ;
∘ une fenêtre transparente (213) étanche résistante à un milieu primaire.

8. Sonde (21) à fibres optiques selon la revendication précédente **caractérisée en ce que** :
- une première extrémité de la partie rigide (212) est soudée à une première extrémité de la partie flexible (211) ;
- une deuxième extrémité de la partie rigide (212) est soudée à la fenêtre transparente (213).

9. Sonde (21) à fibres optiques selon une des revendications 7 ou 8, **caractérisée en ce que** l'enveloppe (220) comprend un miroir (219) incliné de 45° par rapport à l'axe (A) de la partie rigide (212) de la sonde (21).

10. Sonde (21) à fibres optiques selon une des revendications 7 à 9, **caractérisée en ce que** les fibres optiques sont constituées de matériaux résistants aux irradiations nucléaires.

11. Système (2) de mesure de position d'un élément mobile d'un réacteur nucléaire **caractérisé en ce qu'**il comprend :
- N sondes (21) à fibres optiques ;
- N pistes (22) constituées de surfaces réfléchissantes (222) et de surfaces diffusantes (221) résistantes à un milieu primaire, fixées à l'élément mobile ;
apte à mettre en oeuvre le procédé de l'une des revendications 1 à 6.

12. Système (2) de mesure selon la revendication précédente, **caractérisé en ce qu'**une première piste parmi les N pistes (22) comprend une surface diffusante, une deuxième piste parmi les N pistes comprend une surface réfléchissante (222) et une surface diffusante (221) et toute piste supplémentaire comprend le double du nombre de pistes diffusantes et de pistes réfléchissantes par rapport à la piste précédente.

13. Système (2) de mesure selon une des revendications 11 ou 12, **caractérisé en ce qu'**il comprend un système mécanique comportant :
- Une roulette (232) coopérant avec les pistes mobiles et solidaire d'un bras articulé (231) ;
- Un ressort (233) coopérant d'une part avec le bras articulé (231) et d'autre part avec un support fixe (12) ;
et **caractérisé en ce qu'**une sonde (21) parmi les N sondes (21) est fixé au bras articulé (231).

14. Système (2) de mesure selon l'une des revendications 11 à 13 **caractérisé en ce qu'**il comprend :
- Une piste auxiliaire (22b) constituée de P surfaces réfléchissantes (222b) et P surfaces diffusantes (221b) ;
- Deux sondes (21b) à fibre optique espacées d'un angle (α) non nul.

15. Réacteur nucléaire **caractérisé en ce qu'**il comprend une cuve (1) comportant un système de mesure de position d'éléments mobiles selon les revendications 11 à 14.
